(19) Europäisches Patentamt
European Patent Office
Office européen des brevets

(11) **EP 3 608 510 B1**

(12) **EUROPEAN PATENT SPECIFICATION**

(45) Date of publication and mention
of the grant of the patent:
**03.07.2024 Bulletin 2024/27**

(21) Application number: **19189308.0**

(22) Date of filing: **31.07.2019**

(51) International Patent Classification (IPC):
**F01D 5/28** *(2006.01)*        **F01D 15/12** *(2006.01)*
**F02C 3/107** *(2006.01)*        **F02K 3/06** *(2006.01)*

(52) Cooperative Patent Classification (CPC):
**F01D 15/12; F01D 5/282; F02C 3/107; F02K 3/06;**
F05D 2220/3212; F05D 2220/3213;
F05D 2260/40311; F05D 2300/6033; Y02T 50/60

(54) **GAS TURBINE ENGINE WITH CERAMIC MATRIX COMPOSITE TURBINE COMPONENTS**

GASTURBINENTRIEBWERK MIT TURBINENKOMPONENTEN AUS KERAMIKMATRIXVERBUNDSTOFF

MOTEUR DE TURBINE À GAZ AVEC COMPOSANTS DE TURBINE EN COMPOSITE À MATRICE CÉRAMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2018 GB 201813083**

(43) Date of publication of application:
**12.02.2020 Bulletin 2020/07**

(73) Proprietor: **Rolls-Royce plc**
**London N1 9FX (GB)**

(72) Inventors:
• **Townes, Roderick**
**Derby, Derbyshire DE24 8BJ (GB)**
• **Dunning, Pascal**
**Derby, Derbyshire DE24 8BJ (GB)**
• **Whittle, Michael**
**Derby, Derbyshire DE24 8BJ (GB)**

(74) Representative: **Rolls-Royce plc**
**Moor Lane (ML-9)**
**PO Box 31**
**Derby DE24 8BJ (GB)**

(56) References cited:
EP-A1- 3 354 889        US-A1- 2012 301 312
US-A1- 2013 192 266     US-A1- 2013 224 049
US-A1- 2014 283 500     US-A1- 2016 186 583
US-A1- 2016 215 645

**Description**

The present disclosure relates to a gas turbine engine for an aircraft.

The design of a gas turbine engine must balance a number of competing factors. In general, it is desirable to minimize fuel burn and weight. However, gas turbine engines have been used and developed for many years, and so the underlying designs are mature. This high level of design maturity means that advances in, for example, the reduction of fuel burn and/or weight have been relatively small and incremental over recent years.

US patent application US2014283500 discloses a turbofan engine which includes a gas generator section for generating a gas stream flow with higher energy per unit mass flow than that contained in the ambient air and a power turbine that converts the gas stream flow into shaft power. The turbofan engine further includes a propulsor section including a fan driven by the power turbine through a geared architecture at a second speed lower than the first speed for generating propulsive thrust as a mass flow rate of air through a bypass flow path. An Engine Unit Thrust Parameter defined as net engine thrust divided by a product of the mass flow rate of air through the bypass flow path, a tip diameter of the fan and the first rotational speed of the power turbine is less than about 0.15 at a take-off condition.

United States patent application US2013192266 discloses a gas turbine engine which includes a fan rotatable about an axis, a compressor section, a combustor in fluid communication with the compressor section, and a turbine section in fluid communication with the combustor. The turbine section includes a fan drive turbine and a second turbine. The second turbine is disposed forward of the fan drive turbine. The fan drive turbine includes at least three rotors and at least one rotor having a bore radius (R) and a live rim radius (r), and a ratio of r/R is between about 2.00 and about 2.30. A speed change system is driven by the fan drive turbine for rotating the fan about the axis.

It is desirable to improve the rate of development of gas turbine engines.

According to the invention, there is provided a gas turbine engine for an aircraft according to claim 1.

Preferred embodiments are defined in the dependent claims.

The present inventors have found that providing a gas turbine engine with a thrust to core efficiency ratio in the ranges defined herein - which is higher than conventional engines - may provide a particularly efficient gas turbine engine.

Such a thrust to core efficiency ratio is achieved through the optimal use of ceramic matrix composites in a gas turbine engine having a fan which is driven from a turbine via a reduction gearbox.

The first and/or second turbine may comprise at least one ceramic matrix composite component. The second turbine comprises at least one ceramic matrix composite component, which may be in the range of from 2% to 15% of the total mass of the second turbine

Conventionally, components in a turbine section of a gas turbine engine have been manufactured using a metal alloy, such as a nickel alloy. However, in order to achieve greater engine efficiency, it has been found to be desirable to increase the temperature of the core gas flow entering into the turbine from the combustor. Typically, in operation, the temperature of the gas flowing past some of the components in the turbine is near to or above the melting point of those components.

Thus, in order to ensure that such components have sufficient operating life, they require significant cooling. Such cooling is typically provided using air from the compressor that bypasses the combustor. The cooling flow that bypasses the combustor results in reduced engine efficiency, because that flow is simply compressed in the compressor and then expanded through the turbine.

Furthermore, in order to minimize the amount of cooling flow that is used, and thus minimize the impact on engine efficiency, the cooling flow must be used as efficiently as possible. For example, the cooling passages used to cool such turbine components are typically intricate, requiring extensive design and complex manufacturing techniques. This significantly increases the cost of the gas turbine engine.

Still further, the cooling system itself adds mass to the engine.

Selective use of ceramic matrix composites (CMCs) in its turbine is advantageous. For example, CMC use may not actually be appropriate in all areas. Through this understanding, the inventors have derived the optimum level of CMC use in the turbine to be in the claimed ranges. For example, whilst the thermal capability of CMCs - which is typically higher than their metallic counterparts - may lend itself to use in some areas, the reduced thermal conductivity of CMCs (compared to an equivalent metallic component) means that they may not be suitable in some other areas. The very hottest parts of the turbine may experience temperatures that exceed even the capability of CMCs, and thus still require a degree of cooling flow. In such a case, it is appropriate to use a metal than a CMC, due to the greater thermal conductivity of metals potentially improving the effectiveness of the cooling flow in removing heat from the component.

Purely by way of example, where used, the CMC may be SiC-SiC (i.e. silicon carbide fibres in a silicon carbide matrix). However, it will be appreciated that any suitable CMC may be used, and indeed the turbine may comprise more than one composition of CMC (for example having different elements). Any suitable manufacturing method may be used for the CMC, such as a vapour deposition process or a vapour infusion process.

The turbine comprises stator vanes, rotor blades, and may comprise seal segments (which together may be said to form a generally annular ring radially outside the rotor blades), rotor discs (on which rotor blades are provided), one or more radially inner casing elements and one or more radially outer casing elements. The turbine mass may be the total mass of all such turbine components.

The minimum mass of ceramic matrix composite in the second turbine may be 1%, 2%, 3%, 4%, 5%, 6%, 7%, 8%, 9% or 10% of the total mass of the second turbine. The maximum mass of ceramic matrix composite in the second turbine may be 20%, 15%, 14%, 13%, 12%, 11%, 10%, 9%, 8%, 7%, 6% or 5% of the total mass of the second turbine. The mass of ceramic matrix composite in the second turbine as a percentage of the total mass of the second turbine may be in a range having any of the minimum percentages listed above as a lower bound and any compatible maximum percentage listed above as an upper bound.

The second, high pressure, turbine is axially upstream of the first turbine. The first turbine may comprise at least one ceramic matrix composite component. In arrangements including CMCs, the mass of ceramic matrix composite in the first and second turbines may be in the range of from 1% to 15%, optionally 2% to 12%, of the total mass of the first and second turbines

The minimum mass of ceramic matrix composite in the first and second turbines may be 1%, 2%, 3%, 4%, 5%, 6%, 7%, 8%, 9% or 10% of the total mass of the first and second turbines. In arrangements including CMCs, the maximum mass of ceramic matrix composite in the first and second turbines may be 20%, 15%, 14%, 13%, 12%, 11%, 10%, 9%, 8%, 7%, 6% or 5% of the total mass of the first and second turbine. The mass of ceramic matrix composite in the first and second turbines as a percentage of the total mass of the first and second turbines may be in a range having any of the minimum percentages listed above as a lower bound and any compatible maximum percentage listed above as an upper bound.

As noted above, the percentages of CMCs used in the turbine described and claimed herein are based on insight into the most appropriate components for which to use CMCs, taking into account, inter alia, the temperature variation though the turbine. Non-limitative examples are provided below of metallic and CMC components in the gas turbine engine

The most axially upstream row of stator vanes may be directly downstream of the combustor. For example, there may be no rotor blades between the combustor and the stator vanes.

The terms "upstream" and "downstream" are used herein in the conventional manner, i.e. with respect to the flow through the engine in normal use. Thus, for example, the compressor and combustor are in the upstream direction relative to the turbine.

The most axially upstream row of rotor blades may be directly downstream of the most axially upstream row of stator vanes.

The most axially upstream row of rotor blades and the most axially upstream row of stator vanes comprise one or more internal cooling passages and/or film cooling holes. Such internal cooling passages and/or film cooling holes may be supplied with cooling flow from the compressor that has bypassed the combustor.

A CMC component may or may not be provided with internal cooling passages and/or film cooling holes.

The most axially upstream row of rotor blades in the turbine is a part of the second turbine. The most axially upstream row of stator vanes in the turbine may be a part of the second turbine.

The most axially upstream row of rotor blades in the turbine may be radially surrounded by seal segments. Such seal segments may comprise a ceramic matrix composite.

In general, the seal segments may form the radially outer boundary (which may be annular and/or frusto-conical) inside which the turbine blades rotate in use. The radially outer tips of the turbine blades may be adjacent the radially inner surface of the seal segments.

The second turbine comprises at least two rows of stator vanes. The second most axially upstream row of stator vanes (which may be directly axially downstream of the upstream most row of rotor blades) comprise a ceramic matrix composite.

The second turbine comprises at least two rows of rotor blades. The second most axially upstream row of rotor blades comprise a ceramic matrix composite.

The second most axially upstream row of rotor blades in the turbine is a part of the second turbine. The second most axially upstream row of stator vanes in the turbine is a part of the second turbine.

The second most axially upstream row of rotor blades may be radially surrounded by ceramic matrix composite seal segments.

The second turbine may comprise any number of stator vane rows (for example 1, 2, 3, 4, 5 or 6), and one or more of which may comprise a ceramic matrix composite. The second turbine may comprise any number of rotor blade rows and/or surrounding seal segments (for example 1, 2, 3, 4, 5 or 6), and one or more of which may comprise a ceramic matrix composite.

The axially most upstream row of stator vanes in the first turbine (which may be directly downstream of the axially most downstream row of rotor blades in the second turbine) may comprise a ceramic matrix composite.

The axially most upstream row of rotor blades in the first turbine may comprise a ceramic matrix composite. The axially most upstream row of rotor blades in the first turbine may be surrounded by ceramic matrix composite seal segments.

In any aspect of the present disclosure, any one or more rotor blade, stator vane or seal segment (i.e. seal portion that forms at least a part of the radially outer flow path around a row of rotor blades) that experiences a maximum temperature a maximum power condition at which the engine is certified (which may be commonly known as the "red-line" condition) in the range of from 1300K to 2200K - for example in a range having a lower bound of 1300K, 1400K or 1500K and an upper bound of 1900K, 2000K, 2100K or 2200K - may be manufactured using a CMC. In some arrangements, most, or even all, rotor blades experiencing "red-line" temperatures within such ranges may be manufactured using a CMC. In some arrangements, most, or even all, stator vanes experiencing "red-line" temperatures within such ranges may be manufactured using a CMC. In some arrangements, most, or even all, seal segments experiencing "red-line" temperatures within such ranges may be manufactured using a CMC. Rotor blades, stator vanes and seal segments that do not experience "red-line" temperatures in such ranges may be manufactured using a metal, such as a nickel alloy.

Embodiments will now be described by way of example only, with reference to the Figures, in which:

Figure 1 is a sectional side view of a gas turbine engine;

Figure 2 is a close up sectional side view of an upstream portion of a gas turbine engine;

Figure 3 is a partially cut-away view of a gearbox for a gas turbine engine;

Figure 4 is a schematic showing an enlarged view of an upstream portion of the turbine of the gas turbine engine.

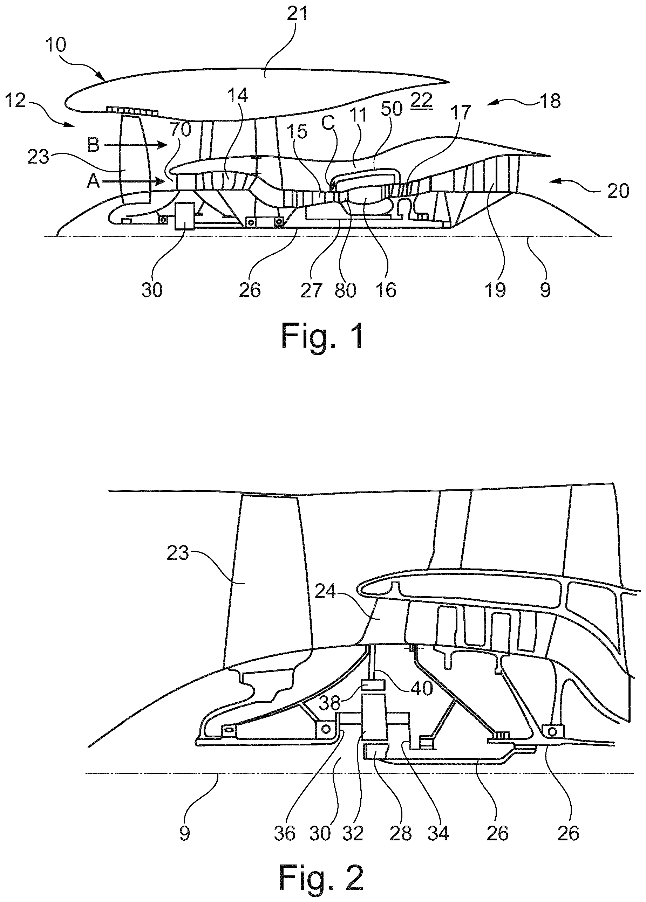

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14 (which may be referred to herein as a first compressor 14), a high-pressure compressor 15 (which may be referred to herein as a second compressor), combustion equipment 16, a high-pressure turbine 17 (which may be referred to herein as a second turbine), a low pressure turbine 19 (which may be referred to herein as a first turbine) and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to process around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

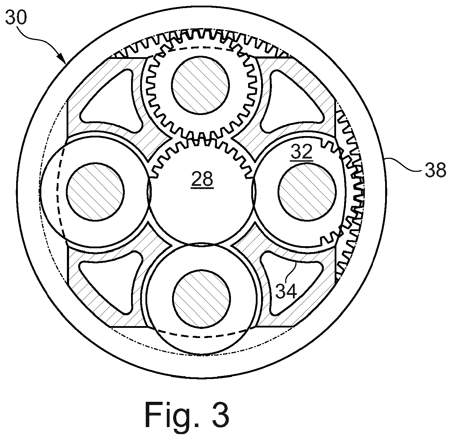

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

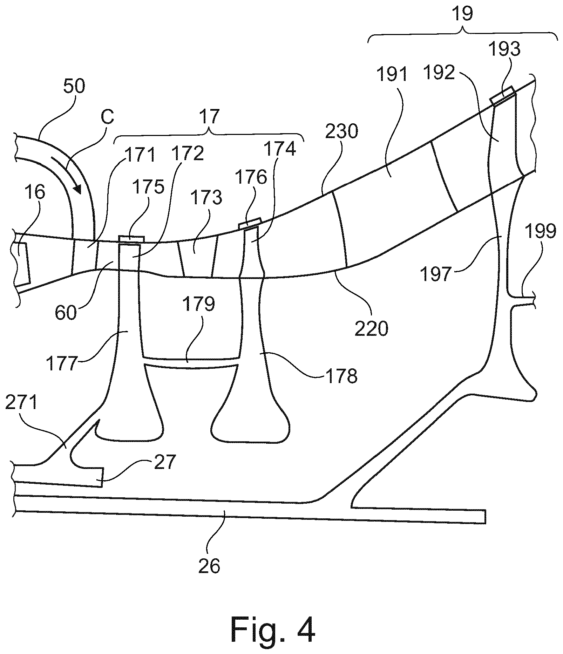

Figure 4 shows a part of the turbine in greater detail. In particular, Figure 4 shows a downstream portion of the combustor 16, the second (high pressure) turbine 17, and an upstream portion of the first (low pressure) turbine 19. The high pressure turbine 17 is connected to the second core shaft 27. The low pressure turbine 19 is connected to the first core shaft 26.

In the illustrated example, the high pressure turbine 17 comprises, in axial-flow series, a first (most axially upstream) stator vane row 171, a first (most axially upstream) rotor blade row 172, a second (second most axially upstream) stator vane row 173, and a second (second most axially upstream) rotor blade row 174.

The first rotor blade row 172 is connected to a rotor disc 177. The second rotor blade row 174 is connected to a rotor disc 178. The two rotor discs 177, 178 are rigidly connected together by a link member 179. At least one of the rotor discs (in the illustrated example the first rotor disc 177) is connected to the second core shaft 27 via an arm 271. Accordingly, in use, the second core shaft 27, rotor discs 177, 178 and rotor blades 172, 174 all rotate together, at the same rotational speed.

The gas turbine engine 10 also comprises seal segments 175 provided radially outside the first rotor blade row 172. The gas turbine engine 10 also comprises seal segments 176 provided radially outside the second rotor blade row 174. The seal segments 175, 176 form the radially outer flow boundary (which may be referred to as the radially outer annulus line) in the region of the respective rotor blade row 172, 174, for example over the axial extent of the tips of the rotor blades 172, 174. The seal segments 175, 176 may form a seal with the tips of the rotor blades to prevent - or at least restrict - flow passing over or past the tips of the rotor blades. The seal segments 175, 176 may be abradable by the rotor blades. Thus, for example, the seal segments 175, 176 may be abraded by the rotor blades in use so as to form an optimal seal therebetween. Each segment may form an annular segment or a frusto-conical segment.

In the illustrated example, the high pressure turbine 17 is a two-stage high pressure turbine, in that it comprises two stages of vanes and blades, each stage comprising a stator vane row followed by a rotor blade row. However, it will be appreciated that gas turbine engines 10 in accordance with the present disclosure may comprise a high pressure turbine with any number of stages, for example 1, 2, 3, 4, 5 or more than 5 stages of stator vanes and rotor blades.

The low pressure turbine 19 is provided downstream of the high pressure turbine 17. An axially most upstream row of stator vanes 191 in the low pressure turbine 19 is provided immediately downstream of the final row of rotor blades 174 of the high pressure turbine 17. An axially most upstream row of rotor blades 192 in the low pressure turbine 19 is provided immediately downstream of the axially most upstream row of stator vanes 191. The axially most upstream row of rotor blades 192 is connected to the first core shaft 26 via a rotor disc. In use, the rotor blades 192 of the low pressure turbine 19 drive the first core shaft 26, which in turn drives the low pressure compressor 14, and also drives - via a gearbox 30 - the fan 23.

Figure 4 only shows an upstream portion of the low pressure turbine 19. However, it will be appreciated that downstream of the illustrated portion there may be provided further rows of stator vanes and rotor blades. For example, the low pressure turbine 19 may comprise 1, 2, 3, 4, 5 or more than 5 stages of stator vanes and rotor blades. The axially most upstream row of rotor blades 192 are connected to one or more (not shown) downstream rotor blade rows via a linkage 199 that is connected to the disc 197 on which the rotor blades 192 are supported.

At least a part of the high pressure turbine 17 and/or the low pressure turbine 19 comprises a CMC in the illustrated example. Purely by way of example, the CMC material may be silicon carbide fibres and/or a silicon carbide matrix (SiC-SiC), although it will be appreciated that other CMCs may be used, such as an oxide-oxide (Ox-Ox CMC material), a monolithic ceramic, and/or the like.

As noted elsewhere herein, CMCs have different properties to conventional turbine materials, such as nickel alloys. For example, CMCs typically have lower density and are able to withstand higher temperatures than metals such as nickel alloys. The present inventors have understood that these properties can be useful in some areas of the turbine 17, 19, but other properties - such as lower thermal conductivity of CMCs compared to nickel alloys - mean that their use is not appropriate in all areas of the turbine 17, 19.

For example, depending on the type of engine (for example in terms of architecture and/or maximum thrust), any one or more of the first (most axially upstream) stator vane row 171, first (most axially upstream) rotor blade row 172, second (second most axially upstream) stator vane row 173, second (second most axially upstream) rotor blade row 174 and first or second set of seal segments 175, 176 of the high pressure turbine may be manufactured using CMCs. Components in the above list that are not manufactured using CMCs may be manufactured using a metal, such as a nickel alloy. Optionally, in any aspect or arrangement described and/or claimed herein and regardless of the number of stages in the high pressure turbine 17, the rotor blades of each stage in the high pressure turbine 17 may be surrounded by seal segments, and the seal segments surrounding any one or more stage (for example all stages) may be made from a CMC.

According to the invention ,in the Figure 4 arrangement, the second stator vane row 173, second rotor blade row 174 and first set of seal segments 175 and second set of seal segments 176 of the high pressure turbine are manufactured using CMCs, whereas the first stator vane row 171 and the first rotor blade row 172 are manufactured using a nickel alloy. In this particular example, the temperature experienced by the first stator vane row 171 and the first rotor blade row 172 may be even higher than that which can be tolerated by CMCs. Accordingly, for this particular example, this means that the first stator vane row 171 and the first rotor blade row 172 - which experience higher temperatures than downstream components due to their proximity to the combustor exit 16 - can take advantage of the relatively high thermal conductivity of the nickel alloy so as to be cooled more effectively using cooling air (taken from the compressor, for example) which may be provided to passages running through the components.

The total mass of the high pressure turbine 17 may include the masses of the stator vanes 171, 173, rotor blades 172, 174, seal segments 175, 176, rotor discs 177, 178, one or more radially inner casing elements that form the inner flow boundary 220 over the axial extent of the high pressure turbine 17, and one or more radially outer casing elements that form the outer flow boundary 230 over the axial extent of the high pressure turbine 17.

CMCs may be used in appropriate parts of the low pressure turbine 19, although in some engines 10 their use in the low pressure turbine 19 may not be appropriate, and thus they may not be used. Purely by way of non-limitative example, in the Figure 4 arrangement, the axially most upstream row of stator vanes 191 is manufactured using a CMC, whereas the axially most upstream row of rotor blades 192 is manufactured using a metal alloy (such as a nickel alloy). In this particular example, the temperature experienced by the axially most upstream row of rotor blades 192 may not be sufficiently high to benefit from the use of CMCs, although it will be appreciated that in other engines 10 in accordance with the present disclosure, the axially most upstream row of rotor blades 192 and/or the associated seal segments 193 may be manufactured using CMCs. Indeed, in some engines, components (such as vanes, blades and seals) downstream of the axially most upstream row of rotor blades 192 in the low pressure turbine 19 may be manufactured using CMCs.

Any component manufactured using CMCs may also be provided with an environmental barrier coating (EBC). Such an EBC may cover at least the gas washed surface of such components. Such an EBC may protect the CMC from environmental deterioration, for example deterioration due to the effects of water vapour. Such an EBC may be, for

example ytterbium disilicate (Yb$_2$Si$_2$O$_7$), which may be applied by any suitable method, such as air plasma spray.

As noted elsewhere herein, CMCs have a higher temperature capability than conventional materials, such as metal alloys. This means that selective use of CMCs in the turbine can mean that some components that would need to be cooled if they were to be made from a metal alloy do not need to be cooled because they are made from a CMC and/or some components manufactured using a CMC require less cooling than if they were to be made from a metal alloy. Additionally or alternatively, through use of CMCs it may be possible to expose some components to a higher temperature than would otherwise be possible.

Purely by way of non-limitative example, optimizing the use of CMCs in the engine (for example in one or more components of the turbine 17, 19 as described herein) may reduce the cooling flow C requirement, which may result in a more efficient engine core (because less flow is bypassing the combustor), meaning that for a given amount of core power, the mass flow entering the core can be reduced and/or the size and/or mass of the turbine(s) 17, 19 can be reduced.

Figures 1 and 4 schematically show turbine cooling apparatus 50. The turbine cooling apparatus extracts cooling flow C from the compressor 14, 15. The cooling flow C bypasses the combustor 16. The cooling flow C is then delivered to the high pressure turbine 17 and optionally the low pressure turbine 19. Although the turbine cooling apparatus 50 is shown in Figures 1 and 4 as extracting cooling flow C from a specific position in the high pressure compressor 15 and delivering it to a specific position in the high pressure turbine 17, it will be appreciated that this is merely for ease of schematic representation, and that the cooling flow C may be extracted from any suitable locations (for example multiple locations in the high pressure compressor 15 and/or the low pressure compressor 14) and delivered to any desired locations (for example multiple locations in the high pressure turbine 17 and/or the low pressure turbine 19).

A reduction in the amount of cooling flow C is desirable, because the cooling flow is not combusted and thus the amount of work that can be extracted from it is lower than for the flow that passes through the combustor 16. With reference to Figure 1, the gas turbine engine 10 has a bypass ratio defined as the mass flow rate of the flow B through the bypass duct 22 divided by the mass flow rate of the flow A entering the engine core at cruise conditions. As the bypass ratio is increased - for example to increase engine efficiency - proportionally less flow A goes through the core. This means that for a given size of engine and/or to be able to withstand a given turbine entry temperature, a higher proportion of the core flow A may be required to be used as turbine cooling flow C. In this regard, as used herein, turbine entry temperature ($T0turb\_in$) may be the maximum stagnation temperature measured at a position 60 in the gas flow path that is immediately upstream of the most axially upstream rotor blade row 172, i.e. at a so-called "red-line" operating condition of the engine at which the engine is certified.

A cooling to bypass efficiency ratio may be defined as the ratio of the mass flow rate C of the turbine cooling flow to the mass flow rate B of the bypass flow at cruise conditions. Using an understanding of the constraints and/or technologies described by way of example herein, the cooling to bypass efficiency ratio may be optimized to be as described and/or claimed herein. Additionally or alternatively, the mass of the high pressure turbine 17 and/or the low pressure turbine 19 may be optimized (for example reduced) relative to a conventional engine. In turn, this may reduce the mass of the high pressure turbine 17 and/or the low pressure turbine 19 as a proportion of the overall mass of the gas turbine engine 10.

Using an understanding of the constraints and/or technologies described by way of example herein, the normalized thrust may be optimized. In this regard, the normalized thrust is defined as the maximum net thrust of the engine 10 at sea level divided by the total mass of the turbines 17, 19 in the engine 10. The illustrated example has a high pressure turbine 17 and a low pressure turbine 19, however, it will be appreciated that where further turbines are included in the engine the total turbine mass includes the mass of all turbines.

As noted elsewhere herein, the optimized use of CMCs may result in a reduced turbine cooling flow requirement. Additionally or alternatively, through use of CMCs it may be possible to expose some components to a higher temperature than would otherwise be possible. This may result in the ability to increase the turbine entry temperatures relative to engines 10 that do not include optimized use of CMCs. In this regard, it has been found that higher turbine entry temperatures are desirable from an engine efficiency perspective.

Using an understanding of the constraints and/or technologies described by way of example herein, the cooling efficiency ratio may be optimized. In this regard, the cooling efficiency ratio is defined as the ratio between the turbine entry temperature (as defined elsewhere herein) and the cooling flow requirement. The cooling flow requirement may be defined as the mass flow rate of the turbine cooling flow C divided by the mass flow rate of the flow A entering the engine core at cruise conditions.

A core size CS may be defined for the gas turbine engine 10 as:

$$CS = Wcomp_{in} \cdot \frac{\sqrt{T0comp\_out}}{P0comp\_out}$$

where:

Wcomp_in is the mass flow rate (kg/s) at entry to the engine core, i.e. the mass flow rate of the core flow A measured at position 70 in Figure 1;

T0comp_out is the stagnation temperature (K) at exit to the compressor, i.e. at exit of the highest pressure compressor 15, indicated by position 80 in Figure 1;

P0comp_out is the stagnation pressure (Pa) at exit to the compressor i.e. at exit of the highest pressure compressor 15, indicated by position 80 in Figure 1.

Using an understanding of the constraints and/or technologies described by way of example herein may allow a thrust to core efficiency ratio TC and/or a fan to core efficiency ratio FC to be optimised to be in the ranges described and/or claimed herein, where the thrust to core efficiency ratio TC and the fan to core efficiency ratio FC are as defined below (with $T0turb\_in$ being the turbine entry temperature at position 60 shown in Figure 4, as described above).

$$TC = (Max\ Net\ Thrust\ at\ Sea\ Level).\frac{\sqrt{T0turb\_in}}{CS}$$

$$FC = (Fan\ Diameter).\frac{\sqrt{T0turb\_in}}{CS}$$

It will be appreciated that the understanding and/or technology described and/or claimed herein results in a particularly efficient gas turbine engine 10. For example, the understanding and/or technology described and/or claimed herein may provide a particularly efficient gas turbine engine 10 in which a fan 23 that is driven by a gearbox 30 is complemented by an optimized engine core.

It will be understood that the invention is not limited to the embodiments above-described and various modifications and improvements can be made without departing from the scope of the invention which is defined by the following claims.

## Claims

1. A gas turbine engine (10) for an aircraft comprising:
   an engine core (11) comprising:

   a first turbine (19), a first compressor (14), and a first core shaft (26) connecting the first turbine to the first compressor;
   a second turbine (17), a second compressor (15), and a second core shaft (27) connecting the second turbine to the second compressor, the second turbine, second compressor, and second core shaft being arranged to rotate at a higher rotational speed than the first core shaft, the gas turbine engine further comprising:

   a fan (23) comprising a plurality of fan blades; and
   a gearbox (30) that receives an input from the first core shaft (26) and outputs drive to the fan so as to drive the fan at a lower rotational speed than the first core shaft, wherein:

   the maximum net thrust of the engine at sea level is in the range of from 160 kN to 550kN;and the normalized thrust is in the range of from 0.25 to 0.5 kN/kg;
   and
   wherein:

   a turbine entry temperature ($T0_{turb\_in}$) is defined as the temperature (K) at the inlet to the most axially upstream turbine rotor in the gas turbine engine at a maximum power condition of the gas turbine engine;

$$CS = Wcomp_{in}.\frac{\sqrt{T0comp\_out}}{P0comp\_out}$$

a core size is defined as                                            where:

Wcomp_in is the mass flow rate (kg/s) at entry to the engine core;
T0comp_out is the stagnation temperature at exit to the compressor;
P0comp out is the stagnation pressure at exit to the compressor; and

a thrust to core efficiency ratio TC is in the range of from $1.5 \times 10^7$ kNkg$^{-1}$sPa to $4.0 \times 10^7$ kNkq$^{-1}$sPa,

where the thrust to core efficiency ratio is defined as $TC =$ $(Max\ Net\ Thrust\ at\ Sea\ Level).\dfrac{\sqrt{T0turb\_in}}{CS}$ .

**characterised in that**: the second turbine (17) comprises at least two rows of stator vanes (171, 173) and two rows of rotor blades (174); the axially most upstream row of stator vanes (171) and the most axially upstream row of rotor blades (174) are manufactured using a nickel alloy and comprise one or more internal cooling passages and/or film cooling holes;
the second most axially upstream row of stator vanes (173) and the second most axially upstream row of rotor blades (174) comprise a ceramic matrix composite.

2. A gas turbine engine according to claim 1, wherein the thrust to core efficiency ratio TC is in the range of from $1.5 \times 10^7$ kNkg$^{-1}$sPa to $3.5 \times 10^7$ kNkg$^{-1}$sPa, optionally $1.5 \times 10^7$ kNkg$^{-1}$sPa to $3 \times 10^7$ kNkg$^{-1}$sPa, optionally in the range of $2 \times 10^7$ kNkg$^{-1}$sPa to $3 \times 10^7$ kNkg$^{-1}$sPa.

3. A gas turbine engine according to claim 1 or claim 2, wherein a fan to core efficiency ratio FC is at least $2 \times 10^5$ mkg$^{-1}$sPa, optionally in the range of from $2 \times 10^5$ mkg$^{-1}$sPa to $3 \times 10^5$ mkg$^{-1}$sPa, optionally in the range of from $2 \times 10^5$ mkg$^{-1}$sPa to $2.5 \times 10^5$ mkg$^{-1}$sPa, where the fan to core efficiency ratio is defined as $FC = (Fan\ Diameter).\dfrac{\sqrt{T0turb\_in}}{CS}$ .

4. A gas turbine engine according to claim 4, wherein the mass of ceramic matrix composite in the second turbine is in the range of from 2% to 15% of the total mass of the second turbine, and optionally in the range of from 4% to 10% of the total mass of the second turbine

5. A gas turbine engine (10) for an aircraft according to claim 4, wherein:

   the first turbine comprises at least one ceramic matrix composite component;
   and, optionally,
   the mass of ceramic matrix composite in the first and second turbines is in the range of from 1% to 15%, optionally 2% to 12%, of the total mass of the first and second turbines

6. A gas turbine engine (10) according to any one of the preceding claims, wherein:

   the most axially upstream row of rotor blades is radially surrounded by seal segments (175); and
   the seal segments comprise a ceramic matrix composite.

7. A gas turbine engine (10) for an aircraft according to claim 6, wherein:
   the second most axially upstream row of rotor blades is radially surrounded by ceramic matrix composite seal segments.

8. A gas turbine engine according to any one of the preceding claims, wherein the axially most upstream row of stator vanes (191) in the first turbine comprise a ceramic matrix composite.

9. A gas turbine engine according to any one of the preceding claims, wherein the axially most upstream row of rotor blades (192) in the first turbine comprise a ceramic matrix composite, the gas turbine engine optionally further comprising ceramic matrix composite seal segments surrounding the axially most upstream row of rotor blades (192) in the first turbine.

**10.** A gas turbine engine according to any one of the preceding claims, wherein:

the turbine entry temperature, defined as the temperature at the inlet to the most axially upstream turbine rotor at a maximum power condition of the gas turbine engine, is in the range of from 1800K to 2100K, optionally at least 1850K, 1900K, 1950K or 2000K; and/or
the fan diameter is in the range of from 225cm to 400cm, optionally in the range of from 250cm to 280cm or 325 to 370cm; and/or
the gear reduction ratio of the gearbox is in the range of from 3.3 to 4; and/or
the maximum net thrust at sea level is in the range of from 160 kN to 550 kN, optionally in the range of from 160 kN to 250 kN or 300 kN to 500 kN.


**Patentansprüche**

**1.** Gasturbinentriebwerk (10) für ein Luftfahrzeug, umfassend:
einen Triebwerkskern (11), der Folgendes umfasst:

eine erste Turbine (19), einen ersten Verdichter (14) und eine erste Kernwelle (26), die die erste Turbine mit dem ersten Verdichter verbindet;
eine zweite Turbine (17), einen zweiten Verdichter (15) und eine zweite Kernwelle (27), die die zweite Turbine mit dem zweiten Verdichter verbindet, wobei die zweite Turbine, der zweite Verdichter und die zweite Kernwelle so angeordnet sind, dass sie sich mit einer höheren Drehzahl als die erste Kernwelle drehen, wobei das Gasturbinentriebwerk ferner Folgendes umfasst:

einen Fan (23), der eine Vielzahl von Fanlaufschaufeln umfasst; und
ein Getriebe (30), das eine Eingabe von der ersten Kernwelle (26) aufnimmt und Antrieb an den Fan abgibt, um den Fan mit einer niedrigeren Drehzahl als die erste Kernwelle anzutreiben, wobei:

der maximale Nettoschub des Triebwerks auf Meereshöhe im Bereich von 160 kN bis 550 kN liegt; und der normalisierte Schub im Bereich von 0,25 bis 0,5 kN/kg liegt;
und wobei:

die Turbineneintrittstemperatur ($T0_{turb\_in}$) als die Temperatur (K) an dem Einlass zu dem am weitesten axialen stromaufwärtigen Turbinenrotor in dem Gasturbinentriebwerk bei einem Höchstleistungszustand des Gasturbinentriebwerks definiert ist;

$$CS = Wcomp_{in} \cdot \frac{\sqrt{T0comp\_out}}{P0comp\_out}$$

eine Kerngröße definiert ist als
wobei:

Wcomp_in die Massenstromrate (kg/s) am Eintritt zu dem Triebwerkskern ist;
T0comp_out die Stagnationstemperatur am Ausgang zu dem Verdichter ist;
P0comp_out der Stagnationsdruck am Ausgang zu dem Verdichter ist;
und
ein Schub-Kern-Effizienzverhältnis TC im Bereich von $1,5 \times 10^7 kNkg^{-1}sPa$ bis $4,0 \times 10^7 kNkg^{-1}sPa$ liegt, wobei das Schub-Kern-Effizienzverhältnis definiert ist als $TC =$

$$(Max\ Net\ Thrust\ at\ Sea\ Level) \cdot \frac{\sqrt{T0turb\_in}}{CS}$$

**dadurch gekennzeichnet, dass**: die zweite Turbine (17) mindestens zwei Reihen von Statorleitschaufeln (171, 173) und zwei Reihen von Rotorlaufschaufeln (174) umfasst; die axiale, am weitesten stromaufwärtige Reihe von Statorleitschaufeln (171) und die am weitesten axiale stromaufwärtige Reihe von Rotorlaufschaufeln (174) unter Verwendung einer Nickellegierung hergestellt sind und einen oder mehrere interne Kühlkanäle und/oder Filmkühllöcher umfassen; die am zweitweitesten axiale stromaufwärtige Reihe von Statorleitschaufeln (173) und die am zweitweitesten axiale stromaufwärtige Reihe von Rotorlaufschaufeln (174) einen Keramikmatrixverbundstoff umfassen.

**2.** Gasturbinentriebwerk nach Anspruch 1, wobei das Schub-Kern-Effizienzverhältnis TC im Bereich von 1,5 × $10^7$kNkg$^{-1}$sPa bis 3,5 × $10^7$kNkg$^{-1}$sPa liegt,

optional 1,5 × $10^7$kNkg$^{-1}$sPa bis 3 × $10^7$kNkg$^{-1}$sPa,
optional im Bereich von 2 × $10^7$kNkg$^{-1}$sPa bis 3 × $10^7$kNkg$^{-1}$sPa.

**3.** Gasturbinentriebwerk nach Anspruch 1 oder Anspruch 2, wobei ein Fan-Kern-Effizienzverhältnis FC mindestens 2 × $10^5$ mkg$^{-1}$sPa beträgt, optional im Bereich von 2 × $10^5$ mkg$^{-1}$sPa bis 3 × $10^5$ mkg$^{-1}$sPa, optional im Bereich von 2 × $10^5$ mkg$^{-1}$sPa bis 2,5 × $10^5$ mkg$^{-1}$sPa, wobei das Fan-Kern-Effizienzverhältnis definiert ist als

$$FC = (Fan\ Diameter).\frac{\sqrt{T0turb\_in}}{cs}.$$

**4.** Gasturbinentriebwerk nach Anspruch 4, wobei die Masse von Keramikmatrixverbundstoff in der zweiten Turbine im Bereich von 2 % bis 15 % der Gesamtmasse der zweiten Turbine liegt und optional im Bereich von 4 % bis 10 % der Gesamtmasse der zweiten Turbine.

**5.** Gasturbinentriebwerk (10) für ein Luftfahrzeug nach Anspruch 4, wobei:

die erste Turbine mindestens eine Komponente aus Keramikmatrixverbundstoff umfasst;
und optional
die Masse des Keramikmatrixverbundstoffs in der ersten und der zweiten Turbine im Bereich von 1 % bis 15 %, optional 2 % bis 12 % der Gesamtmasse der ersten und der zweiten Turbine liegt.

**6.** Gasturbinentriebwerk (10) nach einem der vorhergehenden Ansprüche, wobei:

die am weitesten axiale stromaufwärtige Reihe von Rotorlaufschaufeln radial durch Dichtungssegmente (175) umgeben ist; und
die Dichtungssegmente einen Keramikmatrixverbundstoff umfassen.

**7.** Gasturbinentriebwerk (10) für ein Luftfahrzeug nach Anspruch 6, wobei:
die am zweitweitesten axiale stromaufwärtige Reihe von Rotorlaufschaufeln radial durch Dichtungssegmente aus Keramikmatrixverbundstoff umgeben ist.

**8.** Gasturbinentriebwerk nach einem der vorhergehenden Ansprüche, wobei die axiale, am weitesten stromaufwärtige Reihe von Statorleitschaufeln (191) in der ersten Turbine einen Keramikmatrixverbundstoff umfasst.

**9.** Gasturbinentriebwerk nach einem der vorhergehenden Ansprüche, wobei die axiale, am weitesten stromaufwärtige Reihe von Rotorlaufschaufeln (192) in der ersten Turbine einen Keramikmatrixverbundstoff umfasst, wobei das Gasturbinentriebwerk ferner optional Dichtungssegmente aus einem Keramikmatrixverbundstoff umfasst, die die axiale, am weitesten stromaufwärtige Reihe von Rotorlaufschaufeln (192) in der ersten Turbine umgeben.

**10.** Gasturbinentriebwerk nach einem der vorhergehenden Ansprüche, wobei:

die Turbineneintrittstemperatur, definiert als die Temperatur an dem Einlass zu dem am weitesten axialen stromaufwärtigen Turbinenrotor bei einem Höchstleistungszustand des Gasturbinentriebwerks, im Bereich von 1800 K bis 2100 K liegt, optional mindestens 1850 K, 1900 K, 1950 K oder 2000 K; und/oder
der Fandurchmesser im Bereich von 225 cm bis 400 cm liegt, optional im Bereich von 250 cm bis 280 cm oder 325 bis 370 cm; und/oder
das Untersetzungsverhältnis des Getriebes im Bereich von 3,3 bis 4 liegt; und/oder
der maximale Nettoschub auf Meereshöhe im Bereich von 160 kN bis 550 kN liegt, optional im Bereich von 160 kN bis 250 kN oder 300 kN bis 500 kN.

**Revendications**

**1.** Moteur à turbine à gaz (10) pour un aéronef, comprenant :

un noyau de moteur (11) comprenant :

une première turbine (19), un premier compresseur (14) et un premier arbre de noyau (26) reliant la première turbine au premier compresseur ;

une seconde turbine (17), un second compresseur (15) et un second arbre de noyau (27) reliant la seconde turbine au second compresseur, la seconde turbine, le second compresseur et le second arbre de noyau étant agencés pour tourner à une vitesse de rotation supérieure à celle du premier arbre de noyau, le moteur à turbine à gaz comprenant en outre : une soufflante (23) comprenant une pluralité de pales de soufflante ; et

une boîte d'engrenages (30) qui reçoit une entrée en provenance du premier arbre de noyau (26) et délivre en sortie l'entraînement à la soufflante de façon à entraîner la soufflante à une vitesse de rotation inférieure à celle du premier arbre de noyau, dans lequel :

la poussée nette maximale du moteur au niveau de la mer est comprise entre 160 kN et 550 kN ; et la poussée normalisée est comprise entre 0,25 et 0,5 kN/kg ; et

dans lequel :

une température d'entrée de turbine ($T0_{turb\_in}$) est définie comme la température (K) au niveau de l'admission vers le rotor de turbine le plus en amont axialement dans le moteur à turbine à gaz dans une condition de puissance maximale du moteur à turbine à gaz ;

une taille de noyau est définie comme
$$CS = Wcomp_{in}.\frac{\sqrt{T0comp\_out}}{P0comp\_out}$$
où :

Wcomp_in est le débit massique (kg/s) au niveau de l'entrée vers le noyau de moteur ;
T0comp_out est la température de stagnation au niveau de la sortie vers le compresseur ;
P0comp_out est la pression de stagnation au niveau de la sortie vers le compresseur ;
et

un rapport poussée/efficacité du noyau TC est compris entre $1,5 \times 10^7$ kNkg$^{-1}$sPa et $4,0 \times 10^7$ kNkg$^{-1}$sPa, où le rapport poussée/efficacité du noyau est défini comme

$$TC = (Poussée\ nette\ max\ au\ niveau\ mer).\frac{\sqrt{T0turb\_in}}{cs}$$

**caractérisé en ce que** : la seconde turbine (17) comprend au moins deux rangées d'aubes de stator (171, 173) et deux rangées de pales de rotor (174) ; la rangée d'aubes de stator (171) axialement la plus en amont et la rangée de pales de rotor (174) axialement la plus en amont sont fabriquées à l'aide d'un alliage de nickel et comprennent un ou plusieurs passages de refroidissement internes et/ou trous de refroidissement de film ; la deuxième rangée d'aubes de stator (173) axialement la plus en amont et la deuxième rangée de pales de rotor (174) axialement la plus en amont comprennent un composite à matrice céramique.

2. Moteur à turbine à gaz selon la revendication 1, dans lequel le rapport poussée/efficacité du noyau TC est compris entre $1,5 \times 10^7$ kNkg$^{-1}$sPa et $3,5 \times 10^7$ kNkg$^{-1}$sPa, facultativement entre $1,5 \times 10^7$ kNkg$^{-1}$sPa et $3 \times 10^7$ kNkg$^{-1}$sPa, facultativement entre $2 \times 10^7$ kNkg sPa et $3 \times 10^7$ kNkg$^{-1}$ sPa.

3. Moteur à turbine à gaz selon la revendication 1 ou la revendication 2, dans lequel un rapport d'efficacité soufflante/noyau FC est d'au moins $2 \times 10^5$ mkg$^{-1}$sPa, facultativement entre $2 \times 10^5$ mkg$^{-1}$sPa et $3 \times 10^5$ mkg$^{-1}$sPa, facultativement entre $2 \times 10^5$ mkg$^{-1}$sPa et $2,5 \times 10^5$ mkg$^{-1}$sPa, où le rapport d'efficacité soufflante/noyau est défini

comme $FC = \dfrac{(Diamètre\ soufflante).\frac{\sqrt{T0turb\_in}}{cs}}{}$.

4. Moteur à turbine à gaz selon la revendication 4, dans lequel la masse du composite à matrice céramique dans la seconde turbine étant comprise entre 2 % et 15 % de la masse totale de la seconde turbine, et facultativement entre 4 % et 10 % de la masse totale de la seconde turbine.

5. Moteur à turbine à gaz (10) pour un aéronef selon la revendication 4,

dans lequel :

la première turbine comprend au moins un composant en composite à matrice céramique ;
et facultativement,
la masse de composite à matrice céramique dans les première et seconde turbines est comprise entre 1 % et 15 %, facultativement entre 2 % et 12 %, de la masse totale des première et seconde turbines.

6.  Moteur à turbine à gaz (10) selon l'une quelconque des revendications précédentes, dans lequel :

la rangée de pales de rotor la plus axialement en amont est entourée radialement par des segments d'étanchéité (175) ; et
les segments d'étanchéité comprennent un composite à matrice céramique.

7.  Moteur à turbine à gaz (10) pour un aéronef selon la revendication 6, dans lequel :
la deuxième rangée de pales de rotor la plus en amont axialement est entourée radialement par des segments d'étanchéité en composite à matrice céramique.

8.  Moteur à turbine à gaz selon l'une quelconque des revendications précédentes, dans lequel la rangée d'aubes de stator (191) la plus en amont axialement dans la première turbine comprend un composite à matrice céramique.

9.  Moteur à turbine à gaz selon l'une quelconque des revendications précédentes, dans lequel la rangée de pales de rotor (192) axialement la plus en amont dans la première turbine comprend un composite à matrice céramique, le moteur à turbine à gaz comprenant facultativement en outre des segments d'étanchéité en composite à matrice céramique entourant la rangée de pales de rotor (192) axialement la plus en amont dans la première turbine.

10. Moteur à turbine à gaz selon l'une quelconque des revendications précédentes, dans lequel :

la température d'entrée de la turbine, définie comme la température au niveau de l'admission vers le rotor de turbine le plus axialement en amont dans une condition de puissance maximale du moteur à turbine à gaz, est comprise entre 1800 K et 2100 K, facultativement au moins 1850 K, 1900 K, 1950 K ou 2000 K ; et/ou
le diamètre de la soufflante est compris entre 225 cm et 400 cm, facultativement entre 250 cm et 280 cm ou 325 et 370 cm ; et/ou
le rapport de réduction de la boîte d'engrenages est compris entre 3,3 et 4 ; et/ou
la poussée nette maximale au niveau de la mer est comprise entre 160 kN et 550 kN, facultativement entre 160 kN et 250 kN ou entre 300 kN et 500 kN.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014283500 A
- US 2013192266 A